# FASCICULE DE BREVET EUROPEEN

(11) **EP 2 170 580 B1**
(45) Date de publication et mention de la délivrance du brevet: **13.06.2012**
(21) Numéro de dépôt: 08775081.6
(22) Date de dépôt: 15.07.2008
(51) Int. Cl.: B29C 49/78, B29C 49/58, B29C 49/12

(54) **Installation pour la fabrication de recipients a partir d'une preforme et procede de commande des moyens de soufflage d'une telle installation**
Anlage zur Herstellung von Behältern aus einem Vorformling und Verfahren zur Steuerung des Blasformmittels solch einer Anlage
Installation for the manufacture of containers from a preform and method of controlling the blow-moulding means of such an installation

(30) Priorité: 19.07.2007 FR 0756611
(43) Date de publication de la demande: 07.04.2010
(73) Titulaire: Sidel Participations, 76930 Octeville Sur Mer (FR)
(72) Inventeur: ADRIANSENS, Eric, F-76930 Octeville Sur Mer (FR)
(74) Mandataire: Thibaudeau, David A. C. R.
(86) Numéro de dépôt international: PCT/EP2008/059221
(87) Numéro de publication internationale: WO 2009/010505

(56) Documents cités:
- WO-A-01/53063
- WO-A-02/24435
- FR-A- 2 764 544
- FR-A- 2 766 121
- FR-A- 2 876 942

## Description

La présente invention concerne une installation pour la fabrication de récipients à partir d'une préforme et un procédé de commande des moyens de soufflage d'une telle installation.

L'invention concerne plus particulièrement une installation pour la fabrication de récipients, notamment de bouteilles, par soufflage ou par étirage-soufflage à partir d'une préforme en matière thermoplastique, l'installation comportant au moins :
- un dispositif d'alimentation en préformes destiné à alimenter en préformes une entrée de l'installation,
- une unité de conditionnement thermique comportant au moins un four comprenant des moyens de chauffage des préformes qui sont agencés entre une zone d'entrée dans laquelle les préformes sont amenées par le dispositif d'alimentation et une zone de sortie qui débouche dans une zone, dite de transfert, de l'installation,
- un premier dispositif de transfert qui, agencé dans la zone de transfert, est destiné à transférer les préformes conditionnées thermiquement depuis la zone de sortie du four jusqu'à une zone, dite d'alimentation, d'une unité de moulage,
- l'unité de moulage comportant une roue équipée d'une pluralité de moules répartis circonférentiellement et des moyens associés de soufflage ou d'étirage-soufflage, la roue étant entraînée en rotation de manière que chaque moule parcourt un cycle de transformation depuis ladite zone d'alimentation jusqu'à une zone, dite d'évacuation,
- un deuxième dispositif de transfert qui, agencé dans la zone de transfert, est destiné à transférer les récipients obtenus depuis la zone d'évacuation de l'unité de moulage jusqu'à une sortie de l'installation, et
- un dispositif de commande apte à commander en déplacement les moyens de soufflage ou d'étirage-soufflage qui comportent au moins une tuyère associée à chaque moule.

On connaît de nombreuses installations de ce type, par exemple du document WO-A1-01/53063, qui comportent au moins une unité de moulage équipée d'un dispositif de commande des moyens de soufflage ou d'étirage-soufflage et apte à commander en déplacement au moins une tuyère qui est associée à chaque moule porté par la roue de l'unité de moulage.

De manière connue, la tuyère est généralement agencée au dessus du moule et montée mobile verticalement entre au moins deux positions extrêmes, respectivement une position haute, dite d'attente, et une position basse, dite de soufflage.

La position haute de la tuyère correspond à une position ouverte du moule, soit la position que chaque moule occupe lorsqu'il se trouve dans la zone d'alimentation ou dans la zone d'évacuation de manière à permettre respectivement l'introduction initiale de la préforme et l'évacuation finale du récipient obtenu après le cycle de transformation.

La position basse de la tuyère correspond, à contrario, à la position fermée que chaque moule occupe au cours du cycle de transformation de la préforme en récipient qui est mis en oeuvre sur la roue entre lesdites zones d'alimentation et d'évacuation.

Dans la position basse, le moule étant en position fermée, la tuyère coiffe au moins un orifice de passage du col de la préforme que comporte le moule. L'orifice de passage est par exemple ménagé dans une paroi supérieure horizontale du moule et destiné à permettre le passage du col de la préforme dans le cas d'un fonctionnement de l'unité de soufflage avec des préformes positionnées "col en haut".

En effet, lorsque le moule est fermé, le col de la préforme s'étend en saillie au dessus de la paroi tandis que le corps qui s'étend verticalement sous le col, est reçu à l'intérieur du moule.

Dans une telle installation, le déplacement de la tuyère de soufflage est commandé de manière sélective par le dispositif de commande car la descente depuis la position haute, dite d'attente, vers la position basse, dite de soufflage, n'est mise en oeuvre que si une préforme est introduite dans le moule.

Or, volontairement ou involontairement, il est possible que le flux de préformes comporte un "trou", c'est-à-dire un espace vide sur les moyens de transfert se traduisant dans la zone d'alimentation par une absence de préforme laquelle ne peut par conséquent pas être introduite dans le moule.

A titre d'exemples, on citera le cas dans lequel on utilise pour une application donnée uniquement un moule sur deux de la roue de soufflage, en raison notamment de la cadence de sortie des récipients désirés et qui est par exemple déterminée en fonction de la cadence d'une unité de remplissage agencée en aval de la sortie de l'installation ou on citera encore le cas dans lequel une préforme est éliminée en raison d'une non-conformité, notamment de son profil de chauffe susceptible d'être contrôlé dans la zone de transfert au moyen de dispositif du type caméra thermique.

Cependant, même lorsqu'une préforme n'est pas introduite, la roue continue de fonctionner afin de poursuivre le cycle de transformation en cours dans les autres moules de sorte que le moule vide se trouvant dans la zone d'alimentation va se décaler d'un pas jusqu'au poste suivant une cadence déterminée nécessaire à la synchronisation entres les unités de l'installation.

L'unité de moulage comporte usuellement des moyens d'actionnement pour l'ouverture et la fermeture des moules, par exemple du type mécanique, qui provoquent automatiquement l'ouverture et la fermeture de manière synchrone avec le cycle de transformation, notamment la fermeture du moule en zone d'alimentation ou inversement l'ouverture du moule en zone d'évacuation.

Ainsi, indépendamment de la présence ou de l'absence d'une préforme, chaque moule est automatiquement fermé par les moyens d'actionnement.

Cependant, en cas d'absence de préforme, un moule vide n'est pas clos lorsqu'il est en position fermée car l'orifice de passage se trouve dégagé en raison du maintien en position haute des moyens de soufflage dû à l'absence de préforme.

Or, par cet orifice de passage s'établit une communication possible entre l'intérieur du moule et l'environnement extérieur.

C'est la raison pour laquelle, il existe alors pour le moule vide des risques de contaminations particulaires aéroportées, en particulier des germes, des bactéries, etc. qui, présentes dans l'atmosphère environnante, sont susceptibles de contaminer l'intérieur du moule et par conséquent les préformes et récipients qui seraient ultérieurement fabriqués au moyen du moule contaminé.

De tels risques de contaminations ne sont pas acceptables dans des installations dans lesquelles on recherche à accroître sans cesse le degré d'hygiène en raison d'exigences toujours plus strictes sur la stérilité ou l'aseptisation des récipients fabriqués.

La présente invention vise notamment à résoudre les inconvénients précités et tout particulièrement à remédier aux risques de contaminations particulaires aéroportées de l'unité de moulage.

Dans ce but, l'invention propose un procédé de commande d'une installation pour la fabrication de récipients, notamment de bouteilles, par soufflage ou par étirage-soufflage à partir d'une préforme en matière thermoplastique, l'installation comportant au moins une unité de moulage équipée d'un dispositif de commande apte à commander en déplacement au moins une tuyère de soufflage, ou d'étirage-soufflage, qui est associée à un moule, dans laquelle la tuyère est montée mobile verticalement entre une position haute et une position basse dans laquelle, le moule étant en position fermée, la tuyère coiffe au moins un orifice de passage du col de la préforme que comporte une paroi supérieure horizontale du moule, le procédé de commande comportant un mode de fonctionnement normal en présence d'une préforme dans le moule qui comporte au moins une première étape consistant, le moule étant en position fermée, à commander la descente verticale de la tuyère vers la position basse, caractérisé en ce que le procédé de commande comporte un mode de fonctionnement spécial en l'absence de préforme dans le moule consistant, le moule étant en position fermée, à commander la descente verticale de la tuyère vers la position basse de manière que, tant en fonctionnement qu'à l'arrêt de l'installation, la communication entre l'intérieur du moule et l'environnement extérieur par ledit orifice de passage soit interrompue et que le volume intérieur du moule soit isolé de l'environnement extérieur pour éviter les risques de contaminations particulaires aéroportées..

Grâce à l'invention, on résout de manière simple et économique la lutte contre les risques de contaminations particulaires, le procédé de commande pouvant avantageusement être mis en oeuvre dans des installations existantes en ne procédant qu'à pas ou peu de modifications.

Avantageusement, le procédé comporte au moins une étape préliminaire consistant à détecter la présence ou l'absence de préforme dans le moule.

De préférence, l'installation est du type dans laquelle la tuyère de l'unité de soufflage est apte à réaliser au moins une opération de soufflage en soufflant, par l'intermédiaire d'un orifice inférieur, un fluide sous pression à l'intérieur de la préforme afin de procéder à sa transformation en un récipient.

Avantageusement, le procédé comporte au moins une deuxième étape consistant à commander sélectivement l'introduction dans la tuyère du fluide sous pression de manière que le fluide sous pression ne soit pas introduit dans la tuyère en l'absence de préforme dans le moule.

De préférence, l'installation est du type dans laquelle la tuyère de l'unité de soufflage de l'installation comporte une tige d'élongation destinée à réaliser une opération d'étirage qui précède ou accompagne l'opération de soufflage.

Avantageusement, le procédé comporte au moins une troisième étape consistant à commander sélectivement le déplacement de la tige d'élongation de manière que le coulissement vers le bas de la tige ne soit pas mis en oeuvre en l'absence de préforme dans le moule.

L'invention concerne encore une installation pour la fabrication de récipients, du type décrite précédemment, caractérisée en ce que le dispositif de commande est commandé selon le procédé de commande de l'invention et que l'unité de moulage comporte des moyens de détection qui, destinés à détecter la présence ou l'absence d'une préforme, sont aptes à fournir au dispositif de commande un signal représentatif de la présence ou l'absence d'une préforme dans le moule de manière à permettre une mise en oeuvre sélective de la deuxième étape et/ou de la troisième étape du procédé de commande.

Avantageusement, le dispositif de commande est apte à commander des moyens d'actionnement des moyens de soufflage ou d'étirage-soufflage destinés à provoquer systématiquement le déplacement de la tuyère et sélectivement l'admission dans la tuyère du fluide de soufflage et/ou le déplacement de la tige d'élongation.

De préférence, les moyens d'actionnement des moyens de soufflage ou d'étirage-soufflage sont constitués par des moyens pneumatique, tels que des vérins.

De préférence, l'installation comporte au moins une enceinte de protection formant un caisson disposé de manière à entourer au moins l'unité de moulage, la zone de transfert et la zone de sortie du four de l'installation, l'enceinte délimitant notamment autour de la roue une zone périphérique en "U" s'étendant depuis la zone d'alimentation jusqu'à la zone d'évacuation.

Avantageusement, l'installation comporte un système d'insufflation d'air filtré à l'intérieur de l'enceinte destiné à projeter un flux d'air au moins au dessus de la zone d'alimentation et de la zone d'évacuation dans lesquelles chaque moule est respectivement en position ouverte de manière à éviter toutes contaminations particulaires aéroportées du moule.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique de dessus qui représente un exemple d'installation de fabrication de récipients comportant un dispositif de commande de l'unité de moulage fonctionnant selon le procédé de commande l'invention ;
- la figure 2 est une vue en coupe de détail qui représente une tuyère et un moule de l'un des postes de la roue de l'unité de moulage de l'installation et qui illustre la tuyère en position haute et le moule en position ouverte ;
- la figure 3 est une vue en coupe de détail qui, analogue à la figure 2, illustre la tuyère en position basse et le moule en position fermée en présence d'une préforme ;
- la figure 4 est une vue en coupe de détail qui, analogue à la figure 2, illustre conformément à l'invention la tuyère en position basse alors que le moule en position fermée mais qu'il y a absence de préforme dans le moule ;
- les figures 5 et 6 sont des vues de dessus du moule, en position fermée, respectivement en présence d'une préforme et en l'absence d'une préforme afin d'illustrer par comparaison l'orifice de passage restant libre en l'absence de préforme.

Dans la description et les revendications, on utilisera à titre non limitatif les termes "supérieur" et "inférieur", etc. et les orientations "longitudinale", "verticale" et "transversale" pour désigner respectivement des éléments selon les définitions données dans la description et par rapport au trièdre (L, V, T) représenté sur les figures.

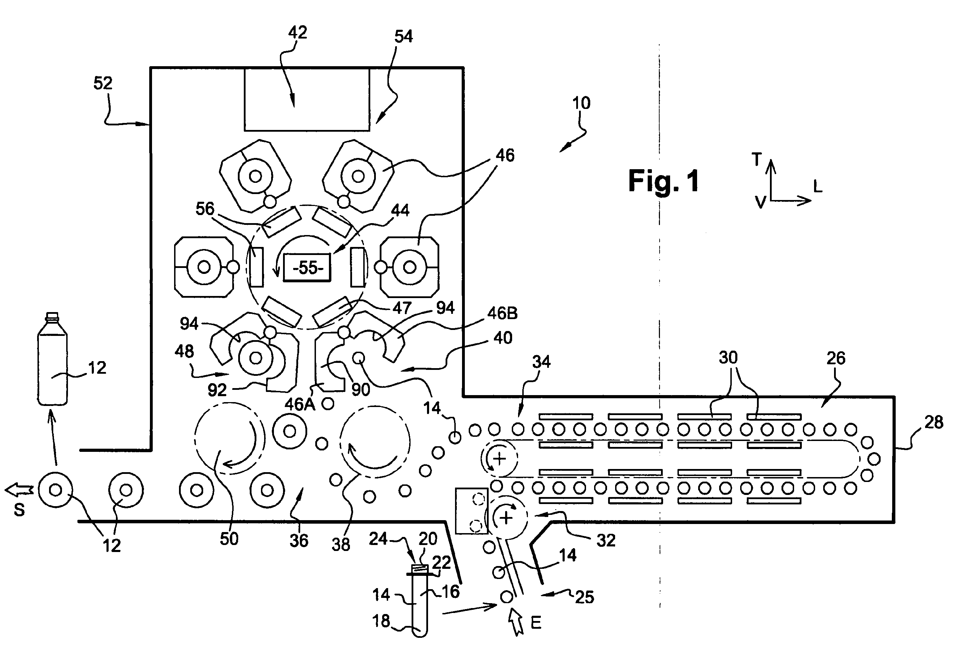

La figure 1 représente schématiquement une installation 10 pour la fabrication de récipients 12, notamment de bouteilles, par soufflage ou par étirage-soufflage à partir d'une préforme 14 en matière thermoplastique, par exemple en PET (Polyéthylène Téréphtalate).

On a représenté en détail sur la figure 1 un exemple de réalisation d'une préforme 14, encore appelée parfois ébauche, destinée à la fabrication d'un récipient à corps creux, tel qu'une bouteille, un flacon etc., avantageusement suivant un procédé de transformation par soufflage ou par étirage- soufflage.

Par définition, le terme "récipient" désigne dans la suite de la présente description aussi bien le récipient final, telle que la bouteille illustrée en détail à la figure 1, qui est par exemple obtenu par un procédé de fabrication à une seule étape de soufflage d'une préforme aboutissant directement au récipient final qu'un récipient intermédiaire obtenu dans le cas de mise en oeuvre d'un procédé à plusieurs étapes de soufflage ou d'étirage-soufflage.

Les préformes 14 sont généralement réalisées selon un procédé de moulage par injection et sont par exemple moulées sur un autre lieu que celui où se trouve l'installation de fabrication des récipients.

Comme on peut mieux le voir sur le détail de la figure 1, la préforme 14 présente généralement un corps 16 globalement tubulaire, de section cylindrique suivant un plan de coupe horizontal, ledit corps 16 s'étendant selon un axe vertical, ici dans une position dite "col en haut".

Bien entendu, la position relative de la préforme 14 "col en haut" ou en variante "col en bas" est fonction des installations et des dispositifs, dits de retournement, permettant de passer de l'une à l'autre sont bien connus de l'homme du métier dans ce domaine technique.

La préforme 14 est fermée à son extrémité inférieure par un fond 18 sensiblement hémisphérique, qui correspond à la partie du corps de la préforme destinée à former le fond du récipient 12. A l'opposé, la préforme 14 est ouverte à son extrémité supérieure laquelle est conformée en un col 20 qui possède déjà la forme définitive du col ou goulot du récipient 12.

La préforme 14 comporte à la jonction entre le corps 16 et le col 20, une collerette 22 qui s'étend radialement vers l'extérieur en saillie par rapport au corps 16 et au col 20.

Le col 20 délimite une ouverture annulaire 24 centrée sur l'axe vertical et il comporte par exemple sur sa surface externe un filetage destiné à permettre la mise en place ultérieure de moyens de fermeture à vis du récipient 12, tels qu'un bouchon (non représenté).

En variante, le col 20 comporte sur sa surface externe des moyens d'accrochage destinés à permettre la mise en place ultérieure de moyens complémentaire de fermeture du récipient 12 du type à encliqueter ou à sceller tels qu'un opercule en plastique ou en métal.

Selon l'exemple de réalisation représenté à la figure 1, l'installation 10 de fabrication de récipients 12 comporte au moins un dispositif d'alimentation 25 en préformes 14 qui est destiné à alimenter en préformes, suivant la flèche, une entrée E de l'installation 10.

L'installation 10 comporte une unité de conditionnement thermique 26 comportant au moins un four 28 comprenant des moyens 30 de chauffage des préformes 14 qui sont agencés entre une zone d'entrée 32 dans laquelle les préformes 14 sont amenées par le dispositif d'alimentation 25 et une zone de sortie 34 qui débouche dans une zone, dite de transfert, 36 de l'installation 10.

De préférence, l'installation 10 comporte un premier dispositif de transfert 38 qui, agencé dans la zone de transfert 36, est destiné à transférer les préformes 14 conditionnées thermiquement depuis la zone de sortie 34 du four 28 jusqu'à une zone, dite d'alimentation, 40 d'une unité de moulage 42.

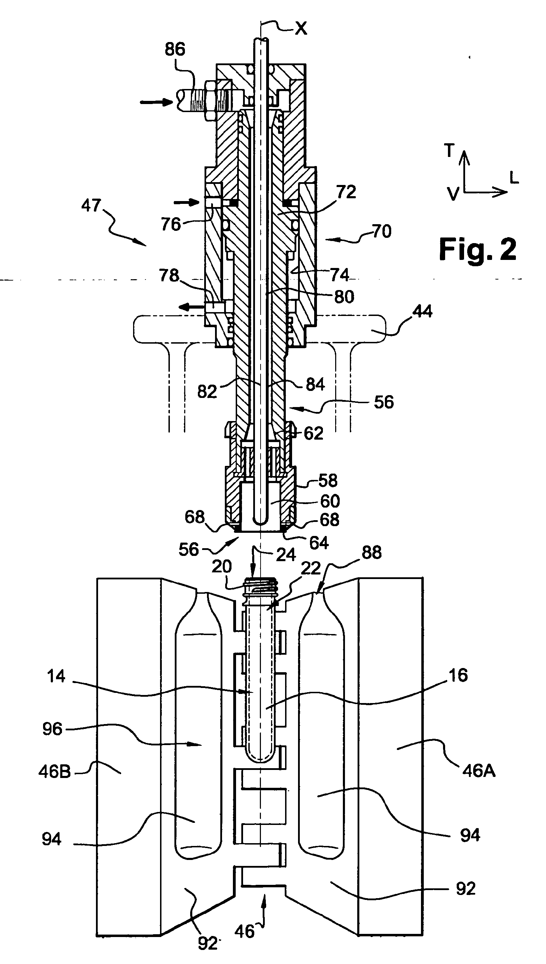

L'unité de moulage 42 comporte une roue 44 équipée d'une pluralité de moules 46 répartis circonférentiellement et des moyens 47 associés de soufflage, ou d'étirage-soufflage qui, représentés aux figures 2 à 4, seront décrits ultérieurement.

De préférence, chaque moule 46 est un moule dit "en portefeuille" qui comporte au moins une empreinte correspondant au récipient 12 à fabriquer, par exemple ici une bouteille.

Un tel type de moule est par exemple décrit dans le document FR-A-2.653.058 concernant une telle unité de moulage encore appelée "porte-moule".

La constitution du moule en seulement deux demi-moules 46A et 46B est possible lorsque le récipient 12 à fabriquer possède une forme relativement simple et est facilement extractible du moule. C'est le cas notamment lorsque le fond du récipient 12 ne présente pas de reliefs prononcés, par exemple lorsqu'il comporte un fond hémisphérique convexe ou un fond plat.

Par contre, lorsque, comme cela se présente dans la majorité des cas, le fond présente une conformation complexe, par exemple lorsque le fond a une forme pétaloïde ou une forme bombée concave, le récipient 12 ne peut pas être extrait, sans déformation et donc sans endommagement, d'un moule 46 en deux parties.

C'est la raison pour laquelle on a recours, pour la fabrication de tels récipients munis d'un fond de forme complexe, à des moules en trois parties, comprenant deux demi-moules mobiles l'un par rapport à l'autre pour le moulage du corps du récipient et un fond de moule déplaçable axialement pour le moulage du fond du récipient.

Par simplification et de manière non limitative, le moule 46 est représenté comme étant un moule en deux parties 46A et 46B.

L'unité de moulage 42 comporte des moyens d'actionnement (non représentés) aptes à commander systématiquement et de manière synchrone la fermeture et l'ouverture des deux demi-moules respectivement dans la zone d'alimentation 40 et dans la zone d'évacuation 48.

A titre d'exemple, de tels moyens d'actionnement (non représentés) de type mécanique comportent par exemple un galet solidaire des demi-moules par des moyens de transmission qui coopèrent avec une came disposée latéralement et présentant un profil requis.

On se reportera par exemple au document WO-A-00/69614 de la Demanderesse concernant un mécanisme de fermeture et de verrouillage du moule destiné à équiper une unité de soufflage.

La roue 44 est entraînée en rotation de manière que chaque moule 46 parcourt un cycle de transformation depuis ladite zone d'alimentation 40 jusqu'à une zone 48, dite d'évacuation.

Dans la zone d'alimentation 40, le moule 46 porté par la roue 44 est ouvert de manière à permettre l'introduction de la préforme 14 préalablement conditionnée thermiquement par le four 28, puis fermé au cours de cycle de transformation de la préforme 14 par soufflage qui s'opère parallèlement à la rotation de la roue 44 jusqu'à ce que le moule 46 atteigne la zone d'évacuation 48 où il est à nouveau ouvert pour permettre l'évacuation du récipient 12 obtenu.

Pour ce faire, l'installation 10 comporte un deuxième dispositif de transfert 50 qui, agencé dans la zone de transfert 36, est destiné à transférer les récipients 12 obtenus depuis la zone d'évacuation 48 de l'unité de moulage 42 jusqu'à une sortie S de l'installation 10 par laquelle les récipients 12 sont évacués.

Avantageusement, l'installation 10 comporte au moins une enceinte 52 de protection formant un caisson disposé de manière à entourer au moins l'unité de moulage 42, la zone de transfert 36 et la zone de sortie 34 du four 28 de l'installation 10, ladite enceinte 52 délimitant ainsi un volume intérieur confiné autour des éléments constitutifs de l'installation 10.

De préférence, l'enceinte 52 de protection délimite notamment autour de la roue 44 une zone périphérique 54 en "U" qui s'étend depuis la zone d'alimentation 40 jusqu'à la zone d'évacuation 48.

De préférence, l'enceinte 52 de protection est constituée d'un ensemble de parois verticales formées par exemple par des panneaux et d'au moins une paroi horizontale formant plafond (non représentée) qui recouvre avantageusement l'unité de moulage 42, la zone de transfert 36 et la zone de sortie 34 du four 28 de l'installation 10.

L'unité de moulage 42 comporte encore un dispositif de commande 55 apte à commander en déplacement au moins une tuyère 56 de soufflage, ou d'étirage-soufflage, qui est associée à chaque moule 46 de la roue 44.

On décrira maintenant plus en détail un exemple de réalisation possible des moyens 47 de soufflage, ici d'étirage-soufflage, qui sont plus particulièrement représentés sur les figures 2 à 4. Les moyens 47 de soufflage ou d'étirage-soufflage comportent donc principalement une tuyère 56.

La tuyère 56 possède un corps 58 en forme de manchon sensiblement cylindrique percé, sur toute sa longueur, d'un trou coaxial constitué de deux orifices 60, 62 coaxiaux à l'axe X de la tuyère.

Le premier 60 de ces orifices constitue l'orifice inférieur final d'amenée du fluide dans la préforme 14 lorsque la tuyère est en position basse, dite de soufflage.

Avantageusement, la tuyère 56 comporte un joint 64 à lèvre qui est fixé autour de la seconde extrémité du premier orifice 60 formant un nez 66, le joint 64 s'étendant en saillie axialement afin d'assurer l'étanchéité lors du soufflage en coopérant avec une partie en vis-à-vis du moule 46.

De préférence, le nez 66 comporte des évents 68 répartis circonférentiellement de manière régulière et qui s'étendent radialement à travers le corps 58.

La tuyère 56 est par exemple fixée, par son côté opposé à celui où est ménagé le premier orifice 60, à un vérin 70. Plus précisément, le corps 58 est rendu solidaire d'un piston 72 coulissant dans un cylindre 74.

De préférence, le corps 58 de la tuyère 56 est vissé à l'extrémité du piston 72 au niveau du second orifice supérieur 62 ménagé dans le corps 58 qui est taraudé, l'extrémité du piston 72 étant filetée de manière correspondante.

Avantageusement, le vérin 70 est un vérin à "double effet".

Le vérin 70 comporte respectivement un premier orifice 76 prévu à une extrémité du cylindre 74 permettant de déplacer le piston 72, et donc la tuyère 56, verticalement vers le bas en direction du moule 46 et un second orifice 78 permettant, à l'inverse, de faire remonter la tuyère 56 vers la position haute illustrée à la figure 2.

De façon connue, le piston 72 est percé en son centre, sur toute sa hauteur, d'un canal 80 tubulaire qui est coaxial à l'axe vertical X de symétrie de la tuyère 56 et du vérin 70.

Avantageusement, la tuyère 56 comporte une tige 82 d'élongation de la préforme 14 qui est susceptible de coulisser à l'intérieur du canal 80.

Le diamètre intérieur du canal 80 est supérieur au diamètre extérieur de la tige 82, de sorte qu'un espace annulaire 84 subsiste autour de la tige 82 de manière à permettre le passage du fluide de présoufflage et/ou de soufflage vers le premier orifice 60 de la tuyère 56 et donc vers la préforme 14 en vue de sa transformation par soufflage dans le moule 46 en un récipient 12.

L'espace annulaire 84 est sélectivement mis en communication avec un conduit 86 d'amenée du fluide sous pression destiné au présoufflage et/ou au soufflage de la préforme 14, ledit conduit 86 étant relié à une ou plusieurs sources d'amenée du fluide.

La tige d'élongation 82 est apte à coulisser verticalement, relativement par rapport au piston 72 et la tuyère 56 grâce à des moyens d'actionnement (non représentés) qui sont avantageusement constitués par un autre vérin commandé, en variante tout autre moyen approprié.

Avantageusement, les moyens d'actionnement de la tige d'élongation 82 sont indépendants de ceux destinés à déplacer la tuyère 46 entre des positions haute et basse.

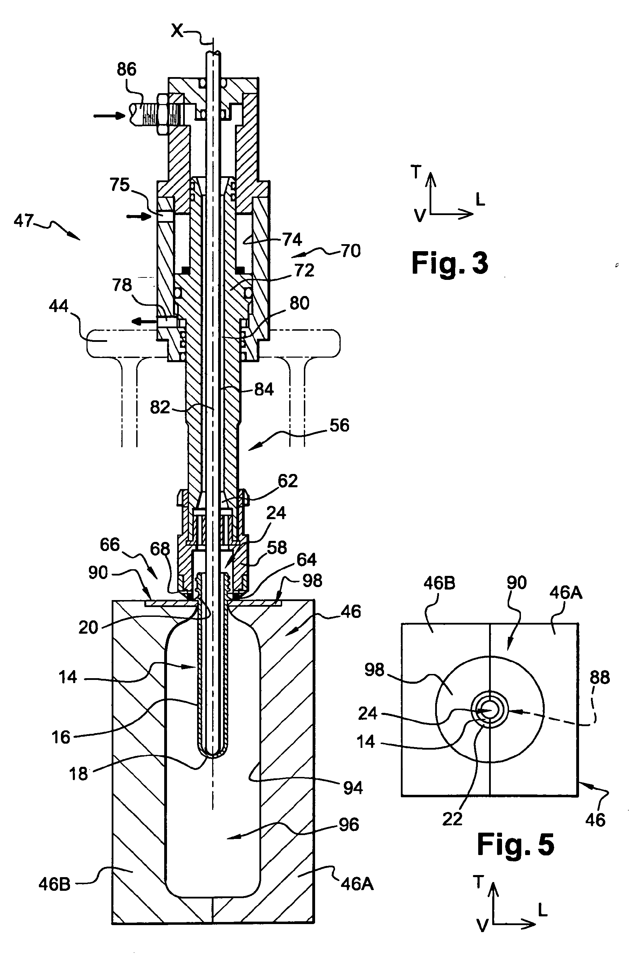

En effet, la tuyère 56 est montée mobile verticalement entre la position haute (figure 2) et une position basse (figure 3) dans laquelle, le moule 46 étant en position fermée, la tuyère 56 coiffe au moins un orifice 88 de passage du col 20 de la préforme 14 que comporte une paroi 90 supérieure horizontale du moule 46.

Comme on peut le voir sur la figure 2, le moule 46 comporte deux demi-moules 46A et 46B qui sont en position ouverte, ladite position ouverte correspondant à la position occupée par le moule 46 dans la zone d'alimentation 40 ou la zone d'évacuation 48 pour permettre respectivement une opération de chargement d'une préforme 14 dans le moule 46 ou une opération de déchargement du moule 46 en retirant le récipient 12, ici une bouteille, obtenu à l'issue du cycle de transformation.

Chaque demi-moules 46A, 46B comporte dans sa face verticale interne 92 une empreinte 94 dont la réunion selon le plan joint vertical de moulage correspond à la forme du récipient 12 final.

Comme on peut le voir sur la figure 3, le moule 46 comporte deux demi-moules 46A et 46B qui sont représentés en position fermée, c'est-à-dire dans la position occupée par le moule 46 entre les zones d'alimentation 40 et d'évacuation 48 lors du cycle de transformation.

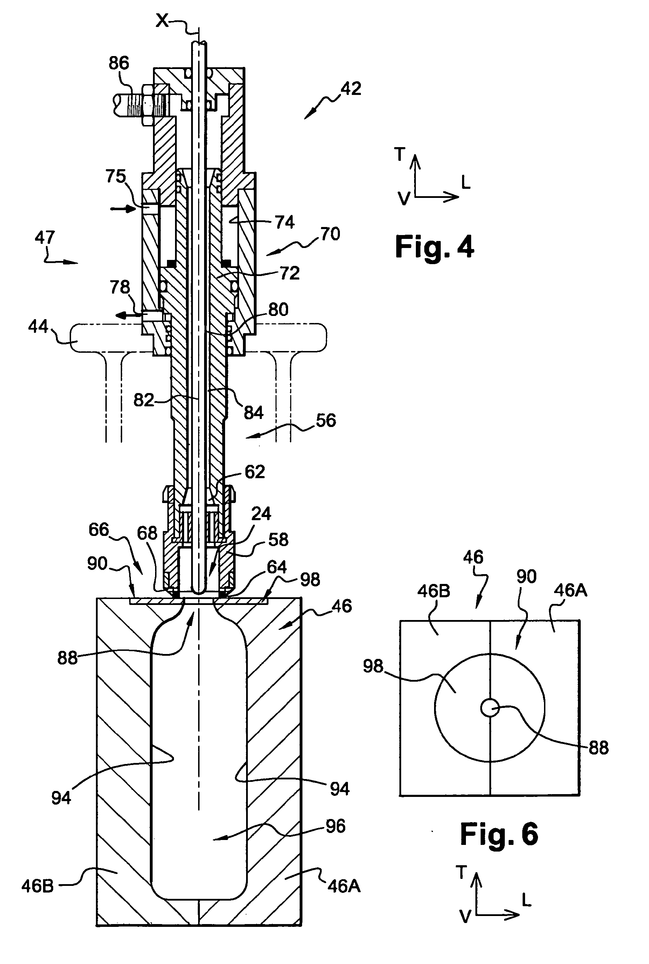

De préférence, le moule 46 comporte dans sa partie supérieure une bague 98 qui, constituée de deux demi-bagues respectivement solidaires des demi-moules 46A, 46B et en vis-à-vis l'une de l'autre, comporte centralement l'orifice 88 de passage de la préforme 14 lorsque moule 46 est en position fermé (figures 5 et 6).Une telle bague 98 constitue alors la paroi horizontale supérieure 90 du moule 46.

On rappellera ci-après le fonctionnement usuel d'une telle installation 10 de fabrication de récipients, plus particulièrement illustré aux figures 2 et 3.

Comme on peut le voir sur la figure 1 représentant l'installation 10, la préforme 14 est amenée par le dispositif d'alimentation 25 dans la zone d'entrée 32 puis traverse le four 28 de conditionnement thermique dont les moyens 30 de chauffage vont permettre d'élever la température de la préforme 14 de façon à la rendre malléable avant les opérations de soufflage et/ou d'étirage, et de moulage.

À cette fin, la préforme 14 est amenée rapidement, de façon à ne pas se solidifier à nouveau, par le premier dispositif de transfert 38 de la zone de sortie 34 du four 28 puis dirigée vers la zone d'alimentation 40 où elle est présentée selon une première orientation, par exemple ici le col en haut, afin d'être finalement introduite dans le moule 46 en position ouverte.

Les demi-moules 46A, 46B sont ensuite fermés sur la préforme 14 introduite qui est alors maintenue en position verticale dans le moule 46, la collerette 22 étant par exemple en appui sur la bague 98.

Ainsi, une fois les deux parties 46A et 46B du moule refermées, la préforme 14 ou plus précisément le corps 16 s'étend dans le volume intérieur 96 du moule 46 que délimite la réunion de chaque empreinte 94 que comporte les demi-moules 46A, 46B.

Il est alors possible au moyen de la tuyère 56 d'injecter par exemple de l'air stérile sous pression à l'intérieur du col 20 de la préforme 14 faisant sailli hors du moule 46.

Une telle opération de soufflage de la préforme 14 insérée dans le moule 46 et préalablement chauffée pour être amollie, va provoquer une déformation de la préforme 14 qui tend sous l'effet de la pression de l'air introduit par l'ouverture 24 à s'appliquer contre la paroi intérieure de chaque empreinte 94 des deux parties de moule 46 fermées.

Avantageusement, lorsque le procédé de transformation est du type par étirage-soufflage, on utilise la tige d'élongation 82 qui, de préférence commandée par le dispositif de commande 55, va alors descendre suivant l'axe X de symétrie pour pénétrer dans la préforme 14 de façon à étirer celle-ci dans le volume intérieur 96 du moule 46.

Comme l'illustre la figure 3, la tuyère 56 est en position basse de soufflage. Le nez 66 de tuyère est en appui contre le moule 46 de manière que le joint 64 coopère avec la bague 98.

De plus, la tige d'élongation 82 est représentée dans une position selon laquelle son extrémité libre est en appui au fond 18 de la préforme 14, c'est-à-dire dans une position précédant immédiatement l'opération d'étirage-soufflage précitée de la préforme.

Comme le montre la figure 3, les dimensions du premier orifice 60 de la tuyère 56 sont telles que le col 20 de la préforme 14 est largement contenu, c'est-à-dire coiffé, par cet orifice 60 de manière que le moule 46 et la préforme 14 soient alors complètement et hermétiquement isolés de l'environnement extérieur, en particulier de l'air potentiellement pathogène et porteur de particules contaminantes.

La description qui vient d'être faite correspond au mode fonctionnement "normal" de l'installation 10.

Cependant il arrive parfois, comme cela a été expliqué précédemment en préambule, qu'une préforme 14 soit manquante et que le moule 46 se trouvant dans la zone d'alimentation 40 soit alors refermé à vide.

Dans une telle configuration, c'est-à-dire en l'absence de préforme 14, le dispositif de commande 55 maintient usuellement la tuyère 56 en position haute de sorte que le moule 46 associé va effectuer un parcours correspondant au cycle de transformation sans être complètement clos.

En effet, bien que le moule 46 soit fermé, l'orifice 88 de passage n'étant pas traversé par la préforme 14 est alors libre et par conséquent autorise une communication entre l'environnement ou l'air extérieur et le volume intérieur 96 du moule 46 que délimite les empreintes 94.

C'est la raison pour laquelle, il existe alors des risques de contaminations par des particules, telles que des bactéries, des germens etc. qui sont susceptibles d'être aéroportées et de pénétrer dans le volume intérieur 96 via l'orifice 88 de passage.

De plus, lorsque la roue 44 en rotation agit comme un ventilateur et provoque de nombreuses turbulences à l'intérieur de l'enceinte 52, or l'enceinte 52 qui a pour fonction l'isolation acoustique et la sécurité "homme-machine" n'est pas hermétique.

Selon l'invention, le procédé de commande de l'installation 10, et plus particulièrement du dispositif de commande 55, comporte donc un mode de fonctionnement spécial consistant, le moule 46 étant en position fermée, à commander en l'absence d'une préforme 14 dans le moule 46, la descente verticale de la tuyère 56 vers la position basse, dite de soufflage, de manière que, tant en fonctionnement qu'à l'arrêt de l'installation, le volume intérieur 96 du moule 46 soit isolé de l'environnement extérieur pour éviter les risques de contaminations particulaires aéroportées.

Ainsi, la tuyère 56 est systématiquement descendue de sa position haute vers sa position basse et non plus sélectivement comme cela était le cas précédemment.

Avantageusement, le dispositif de commande 55 est par exemple un automate susceptible d'être programmé pour exécuter systématiquement, en particulier en l'absence de préforme, la descente de la tuyère 56 afin d'isoler le moule 46.

En variante, les moyens d'actionnement de la tuyère 56, tels que le vérin 70, pourraient donc être remplacés par des moyens d'actionnement de type mécanique ou autre qui similaires à ceux commandant la fermeture du moule 46 seraient aptes à provoquer systématiquement la descente de la tuyère 56.

De préférence, le procédé de commande comporte, en mode de fonctionnement spécial, une détection de la présence ou l'absence de préforme 14 dans le moule 46.

En effet, la descente du seul nez 66 de la tuyère 56 permet, grâce au joint 64, d'isoler le moule 46 en coiffant totalement l'orifice 88 de passage, et cela afin qu'aucune communication entre le volume intérieur 96 et l'environnement extérieur ne soit dès lors possible comme l'illustre la figure 4.

De préférence, le procédé de commande comportant une telle détection, commande aussi sélectivement l'introduction dans la tuyère 56, par le conduit d'alimentation 86, du fluide sous pression de manière que le fluide sous pression ne soit pas introduit dans la tuyère en l'absence de préforme à souffler dans le moule 46 ou encore que le fluide sous pression ne soit introduit dans le canal 80 que si et seulement si une préforme 14 à souffler est présente dans le moule 46.

Avantageusement, on réduit les coûts en évitant de consommer inutilement un volume important de fluide lorsque aucune opération de soufflage n'est nécessaire, le fluide se soufflage étant généralement constitué par de l'air préalablement traité en vue de présenter le degré de stérilité requis.

Pour des raisons similaires, lorsque le récipient 12 est fabriqué selon un procédé d'étirage-soufflage, le procédé commande sélectivement le déplacement de la tige d'élongation 82 de manière que le coulissement vers le bas de la tige ne soit pas mis en oeuvre inutilement en l'absence de préforme 14 à étirer dans le moule 46 ou encore de manière que la tige 82 ne soit actionnée que lorsqu'une préforme à étirer est présente dans le moule 46.

Avantageusement, le dispositif de commande 55 de l'unité de moulage 42 est donc commandé selon le procédé de commande de l'invention décrit précédemment, respectivement en mode de fonctionnement normal et en mode de fonctionnement spécial.

Avantageusement, l'unité de moulage 42 comporte des moyens de détection (non représentés) qui sont destinés à détecter la présence ou l'absence d'une préforme 14 en vue de la mise en ouvre des modes de fonctionnement du procédé de commande.

De tels moyens de détection sont par exemple agencés au voisinage du premier de dispositif de transfert 38 et en aval d'un dispositif de contrôle du profil de chauffe des préformes lorsque l'installation 10 est équipée d'un tel dispositif.

Avantageusement, les moyens de détection sont aptes à fournir au dispositif de commande 55 un signal représentatif de la présence ou de l'absence d'une préforme 14 dans le moule 46 de manière à permettre une mise en oeuvre sélective du mode de fonctionnement spécial du procédé de commande.

Grâce à de tels moyens de détection, le dispositif de commande 55 est donc apte à commander les différents moyens d'actionnement des moyens de soufflage ou d'étirage-soufflage destinés à provoquer d'une part systématiquement le déplacement de la tuyère 56 et, d'autre part, sélectivement l'admission dans la tuyère 56 du fluide de soufflage et/ou le déplacement de la tige d'élongation 82.

Comme cela a été représenté sur les figures 2 à 4, les moyens d'actionnement des moyens de soufflage ou d'étirage-soufflage sont de préférence constitués par des moyens pneumatique, tels que des vérins.

En variante, les moyens d'actionnement commandés par le dispositif de commande 55 sont constitués par des moyens de type hydraulique ou électrique.

Grâce au procédé de commande selon l'invention, on accroît sensiblement la qualité des récipients fabriqués en augmentant le degré de sécurité bactériologique.

Avantageusement, l'installation 10 comporte un système (non représenté) d'insufflation d'air filtré à l'intérieur de l'enceinte 52 destiné à projeter un flux d'air au dessus au moins de la zone d'alimentation 40 et de la zone d'évacuation 48 dans lesquelles chaque moule 46 est respectivement en position ouverte dans l'attente de l'introduction d'une préforme 14 ou de l'extraction du récipient 12.

Avantageusement, le système est apte à insuffler en permanence un flux laminaire d'air filtré, de préférence aseptique ou stérile, que l'installation soit en fonctionnement ou à l'arrêt.

Un tel système d'insufflation d'air filtré permet de limiter encore les risques de contaminations particulaires aéroportées du volume intérieur 96 du moule 46.

## Revendications

1. Procédé de commande d'une installation (10) pour la fabrication de récipients (12), notamment de bouteilles, par soufflage ou par étirage-soufflage à partir d'une préforme (14) en matière thermoplastique, l'installation (10) comportant au moins une unité de moulage (42) équipée d'un dispositif de commande (55) apte à commander en déplacement au moins une tuyère (56) de soufflage, ou d'étirage-soufflage, qui est associée à un moule (46), dans laquelle la tuyère (56) est montée mobile verticalement entre une position haute et une position basse dans laquelle, le moule (46) étant en position fermée, la tuyère (56) coiffe au moins un orifice (88) de passage de la préforme (14) que comporte une paroi supérieure horizontale (90) du moule (46), le procédé de commande comportant un mode de fonctionnement normal en présence d'une préforme (14) dans le moule (46) qui comporte au moins une première étape consistant, le moule (46) étant en position fermée, à commander la descente verticale de la tuyère (56) vers la position basse,
**caractérisé en ce que** le procédé de commande comporte un mode de fonctionnement spécial en l'absence de préforme (14) dans le moule (46) consistant, le moule (46) étant en position fermée, à commander la descente verticale de la tuyère (56) vers la position basse de manière que, tant en fonctionnement qu'à l'arrêt de l'installation (10), la communication entre l'intérieur du moule et l'environnement extérieur par ledit orifice de passage (88) soit interrompue et que le volume intérieur (96) du moule (46) soit isolé de l'environnement extérieur pour éviter les risques de contaminations particulaires aéroportées.

2. Procédé de commande d'une installation (10) selon la revendication 1, **caractérisé en ce que** le procédé de commande en mode de fonctionnement spécial comporte au moins une détection de la présence ou de l'absence de préforme (14) dans le moule (46).

3. Procédé de commande d'une installation (10) selon la revendication 2, **caractérisé en ce que**, en mode de fonctionnement spécial, le procédé commande sélectivement l'introduction d'un fluide sous pression dans la tuyère (56) de manière à ne pas introduire le fluide sous pression dans la tuyère (56) en l'absence de préforme (14) dans le moule (46).

4. Procédé de commande d'une installation (10) selon la revendication 3, dans laquelle la tuyère (56) de l'unité de soufflage (42) de l'installation (10) comporte une tige d'élongation (82), **caractérisé en ce que**, en mode de fonctionnement spécial, le procédé commande sélectivement le déplacement de la tige d'élongation (82) de manière que le coulissement vers le bas de la tige (82) ne soit pas mis en oeuvre en l'absence de préforme (14) dans le moule (46).

5. Installation (10) pour la fabrication de récipients (12), notamment de bouteilles, par soufflage ou par étirage-soufflage à partir d'une préforme (14) en matière thermoplastique, l'installation (10) comportant au moins :
- un dispositif d'alimentation (25) en préformes destiné à alimenter en préformes (14) une entrée (E) de l'installation (10),
- une unité de conditionnement thermique (26) comportant au moins un four (28) comprenant des moyens (30) de chauffage des préformes (14) qui sont agencés entre une zone d'entrée (32) dans laquelle les préformes (14) sont amenées par le dispositif d'alimentation (25) et une zone de sortie (34) qui débouche dans une zone, dite de transfert, (36) de l'installation,
- un premier dispositif de transfert (38) qui, agencé dans la zone de transfert (36), est destiné à transférer les préformes (14) conditionnées thermiquement depuis la zone de sortie (34) du four (28) jusqu'à une zone, dite d'alimentation, (40) d'une unité de moulage (42),
- l'unité de moulage (42) comportant une roue (44) équipée d'une pluralité de moules (46) répartis circonférentiellement et des moyens (47, 56, 82) associés de soufflage ou d'étirage-soufflage, la roue (44) étant entraînée en rotation de manière que chaque moule (46) parcourt un cycle de transformation depuis ladite zone d'alimentation (40) jusqu'à une zone, dite d'évacuation (48),
- un deuxième dispositif de transfert (50) qui, agencé dans la zone de transfert (36), est destiné à transférer les récipients (12) obtenus depuis la zone d'évacuation (48) de l'unité de moulage (42) jusqu'à une sortie (S) de l'installation (10), et
- un dispositif de commande (55) apte à commander en déplacement les moyens (47, 56, 82) de soufflage ou d'étirage-soufflage qui comportent au moins une tuyère (56) associée à chaque moule (46),
**caractérisée en ce que** le dispositif de commande (55) est commandé selon le procédé de commande de l'une des revendications 3 ou 4 et **en ce que** l'unité de moulage (42) comporte des moyens de détection qui, destinés à détecter la présence ou l'absence d'une préforme (14), sont aptes à fournir au dispositif de commande (55) un signal représentatif de la présence ou l'absence d'une préforme (14) dans le moule (46) de manière à permettre une mise en oeuvre sélective du mode de fonctionnement spécial du procédé de commande.

6. Installation selon la revendication 5, **caractérisée en ce que** le dispositif de commande (55) est apte à commander des moyens d'actionnement (70) des moyens (47) de soufflage ou d'étirage-soufflage destinés à provoquer systématiquement le déplacement de la tuyère (56) et sélectivement l'admission dans la tuyère (56) du fluide de soufflage et/ou le déplacement de la tige d'élongation (82).

7. Installation (10) selon la revendication 6, **caractérisée en ce que** les moyens d'actionnement (70) des moyens de soufflage ou d'étirage-soufflage sont constitués par des moyens pneumatique, tels que des vérins.

8. Installation (10) selon l'une quelconque des revendications 5 à 7, comportant au moins une enceinte (52) de protection formant un caisson disposé de manière à entourer au moins l'unité de moulage (42), la zone de transfert (36) et la zone de sortie (34) du four (28) de l'installation, l'enceinte (52) délimitant notamment autour de la roue (44) une zone périphérique (54) en "U" s'étendant depuis la zone d'alimentation (40) jusqu'à la zone d'évacuation (48), **caractérisée en ce que** l'installation (10) comporte un système d'insufflation d'air filtré à l'intérieur de l'enceinte (52) destiné à projeter un flux d'air au moins au dessus de la zone d'alimentation (40) et de la zone d'évacuation (48) dans lesquelles chaque moule (46) est respectivement en position ouverte de manière à éviter toutes contaminations particulaires aéroportées du moule (46).

## Claims

1. A method of controlling an installation (10) for manufacturing containers (12), in particular bottles, by blow-molding or by stretch-blow-molding from a thermoplastic material form (14), the installation (10) including at least one molding unit (42) equipped with a control device (55) adapted to control movement of at least one blow-molding or stretch-blow-molding nozzle (56) which is associated with a mold (46), in which the nozzle (56) is mounted to be mobile vertically between a top position and a bottom position in which, the mold (46) being in a closed position, the nozzle (56) caps at least one orifice (88) for the neck of the preform (14) that includes a top horizontal wall (90) of the mold (46), the control method comprising a normal operating mode in presence of a preform (14) in the mold (46) which comprises at least one first step entailing, the mold (46) being in a closed position, commanding vertical lowering of the nozzle (56) toward the bottom position,
**characterized in that** the control method comprises a special operating mode in the absence of a preform (14) in the mold (46) entailing, the mold (46) being in closed position, to command vertical lowering of the nozzle (56) towards the bottom position in order that, whether the installation (10) is operating or stopped, the communication between the interior of the mold and the exterior environement is stopped and the interior volume (96) of the mold (46) is isolated from the exterior environment to prevent the risk of airborne particle contamination.

2. The method of controlling an installation (10) as claimed in claim 1, **characterized in that** the control method in special operating mode includes at least detecting the presence or absence of a preform (14) in the mold (46).

3. The method of controlling an installation (10) as claimed in claim 2, **characterized in that**, in special operating mode, the method selectively commands introduction into the nozzle (56) of the fluid under pressure so that the fluid under pressure is not introduced into the nozzle (56) in the absence of a preform (14) in the mold (46).

4. The method of controlling an installation (10) as claimed in claim 3, in which the nozzle (56) of the blow-molding unit (42) of the installation (10) includes an elongating rod (82), **characterized in that**, in special operating mode, the method selectively commands movement of the elongating rod (82) so that the downward sliding of the rod (82) is not effected in the absence of a preform (14) in the mold (46).

5. An installation (10) for manufacturing containers (12), in particular bottles, by blow-molding or by stretch-blow-molding from a thermoplastic material preform (14), the installation (10) including at least:
- a preform feeding device (25) adapted to feed an entry (E) of the installation (10) with preforms (14),
- a thermal conditioning unit (26) including at least one oven (28) including means (30) for heating preforms (14) arranged between an entry area (32) to which the preforms (14) are fed by the feed device (25) and an exit area (34) which opens into a transfer area (36) of the installation,
- a first transfer device (38) in the transfer area (36) adapted to transfer thermally conditioned preforms (14) from the exit area (34) of the oven (28) to a feeding area (40) of a molding unit (42),
- the molding unit (42) including a wheel (44) equipped with a plurality of molds (46) distributed in the circumferential direction and associated blow-molding or stretch-blow-molding means (47, 56, 82), the wheel (44) being driven in rotation so that each mold (46) follows a transformation cycle from said feed area (40) to a evacuation area (48),
- a second transfer device (50) in the transfer area (36) adapted to transfer containers (12) obtained from the evacuation area (48) of the molding unit (42) to an exit (S) of the installation (10), and
- a control device (55) adapted to control movement of the blow-molding or stretch-blow-molding means (47, 56, 82) that include at least one nozzle (56) associated with each mold (46),
**characterized in that** the control device (55) is controlled in accordance with the control method according to any of claims 3 or 4 and **in that** the molding unit (42) includes detection means adapted to detect the presence or absence of a preform (14) and to supply to the control device (55) a signal representative of the presence or absence of a preform (14) in the mold (46) to allow selective execution of the special operating mode of the control method.

6. The installation as claimed in claim 5, **characterized in that** the control device (55) is adapted to control means (70) for actuating the blow-molding or stretch-blow-molding means (47) adapted systematically to cause movement of the nozzle (56) and selectively to cause admission into the nozzle (56) of the blow-molding fluid and/or movement of the elongating rod (82).

7. The installation (10) as claimed in claim 6, **characterized in that** the actuating means (70) of the blow-molding or stretch-blow-molding means consist of pneumatic means such as pneumatic actuators.

8. The installation (10) as claimed in any of claims 5 to 7, including at least one protective enclosure (52) forming a box-section disposed around at least the molding unit (42), the transfer area (36) and the exit area (34) of the oven (28) of the installation, the enclosure (52) delimiting in particular around the wheel (44) a U-shaped peripheral area (54) extending from the feed area (40) to the evacuation area (48), **characterized in that** the installation (10) includes a system for blowing filtered air into the interior of the enclosure (52) adapted to direct a flow of air at least above the feed area (40) and the evacuation area (48) in which each mold (46) is in an open position to prevent contamination of the mold (46) by airborne particles.

## Patentansprüche

1. Verfahren zur Steuerung einer Anlage (10) für die Herstellung von Behältern (12), insbesondere von Flaschen, durch Blasen oder durch Streckblasen aus einem Vorformling (14) aus Thermoplast, wobei die Anlage (10) wenigstens eine Formeinheit (42) umfasst, die mit einer Steuerungsvorrichtung (55) ausgestattet ist, welche zur Bewegungssteuerung wenigstens einer Düse (56) zum Blasen, oder zum Streckblasen, die einer Form (46) zugeordnet ist, geeignet ist, wobei die Düse (56) zwischen einer oberen Position und einer unteren Position, in der - wenn die Form (46) sich in der geschlossenen Stellung befindet - die Düse (56) wenigstens eine in einer oberen horizontalen Wand (90) der Form (46) vorhandene Öffnung (88) für den Durchgang des Vorformlings (14) bedeckt, vertikal beweglich angebracht ist, wobei das Steuerungsverfahren einen Normalbetriebsmodus bei Vorliegen eines Vorformlings (14) in der Form (46) umfasst, der wenigstens einen ersten Schritt umfasst, welcher darin besteht, - wenn die Form (46) sich in der geschlossenen Stellung befindet - die vertikale Abwärtsbewegung der Düse (56) in die untere Position zu steuern,
**dadurch gekennzeichnet, dass** das Steuerungsverfahren einen Sonderbetriebsmodus bei Nichtvorliegen eines Vorformlings (14) in der Form (46) umfasst, der darin besteht, - wenn die Form (46) sich in der geschlossenen Stellung befindet - die vertikale Abwärtsbewegung der Düse (56) in die untere Position derart zu steuern, dass sowohl im Betrieb als auch bei Stillstand der Anlage (10) die Verbindung zwischen dem Innenraum der Form und der Außenumgebung über die Durchgangsöffnung (88) unterbrochen ist und dass der Innenraum (96) der Form (46) von der Außenumgebung isoliert ist, um die Risiken von luftgetragenen Partikelkontaminationen zu umgehen.

2. Verfahren zur Steuerung einer Anlage (10) nach Anspruch 1, **dadurch gekennzeichnet, dass** das Steuerungsverfahren im Sonderbetriebsmodus wenigstens ein Erfassen des Vorliegens oder des Nichtvorliegens eines Vorformlings (14) in der Form (46) umfasst.

3. Verfahren zur Steuerung einer Anlage (10) nach Anspruch 2, **dadurch gekennzeichnet, dass** im Sonderbetriebsmodus das Verfahren das Einleiten eines Druckfluids in die Düse (56) selektiv steuert, so dass bei Nichtvorliegen eines Vorformlings (14) in der Form (46) das Druckfluid nicht in die Düse (56) eingeleitet wird.

4. Verfahren zur Steuerung einer Anlage (10) nach Anspruch 3, wobei die Düse (56) der Blaseinheit (42) der Anlage (10) eine Verlängerungsstange (82) umfasst, **dadurch gekennzeichnet, dass** im Sonderbetriebsmodus das Verfahren die Bewegung der Verlängerungsstange (82) derart selektiv steuert, dass das Abwärtsschieben der Stange (82) nicht vollzogen wird, wenn kein Vorformling (14) in der Form (46) vorhanden ist.

5. Anlage (10) zur Herstellung von Behältern (12), insbesondere von Flaschen, durch Blasen oder durch Streckblasen aus einem Vorformling (14) aus Thermoplast, wobei die Anlage (10) wenigstens umfasst:
- eine Vorrichtung zum Zuführen (25) von Vorformlingen, die dazu bestimmt ist, einen Eingang (E) der Anlage (10) mit Vorformlingen (14) zu beaufschlagen,
- eine Einheit zum thermischen Konditionieren (26), die wenigstens einen Ofen (28) umfasst, der Mittel (30) zum Erhitzen der Vorformlinge (14) aufweist, welche zwischen einem Eingangsbereich (32), in dem die Vorformlinge (14) über die Zuführvorrichtung (25) zugeführt werden, und einem Ausgangsbereich (34), der in einen sogenannten Transferbereich (36) der Anlage mündet, angeordnet sind,
- eine erste Transportvorrichtung (38), die -in dem Transferbereich (36) angeordnet- dazu bestimmt ist, die thermisch konditionierten Vorformlinge (14) von dem Ausgangsbereich (34) des Ofens (28) bis zu einem sogenannten Zuführbereich (40) einer Formeinheit (42) zu transportieren,
- wobei die Formeinheit (42) ein Rad (44), das mit einer Vielzahl von über den Umfang verteilten Formen (46) ausgestattet ist, sowie zugeordnete Blas- oder Streckblasmittel (47, 56, 82) umfasst, wobei das Rad (44) drehangetrieben wird, so dass jede Form (46) von dem Zuführbereich (40) bis zum einem sogenannten Austragbereich (48) einen Transformationszyklus durchläuft,
- eine zweite Transportvorrichtung (50), die -in dem Transferbereich (36) angeordnet- dazu bestimmt ist, die erhaltenen Behälter (12) von dem Austragbereich (48) der Formeinheit (42) bis zu einem Ausgang (S) der Anlage (10) zu transportieren, sowie
- eine Steuerungsvorrichtung (55), die zur Bewegungssteuerung der Blas- oder Streckblasmittel (47, 56, 82), welche wenigstens eine jeder Form (46) zugeordnete Düse (56) umfassen, geeignet ist,
**dadurch gekennzeichnet, dass** die Steuerungsvorrichtung (55) nach dem Steuerungsverfahren von einem der Ansprüche 3 oder 4 gesteuert wird und dass die Formeinheit (42) Erfassungsmittel umfasst, die -dazu bestimmt, das Vorliegen oder das Nichtvorliegen eines Vorformlings (14) zu erfassen- dazu geeignet sind, der Steuerungsvorrichtung (55) ein für das Vorliegen oder das Nichtvorliegen eines Vorformlings (14) in der Form (46) repräsentatives Signal zu liefern, um ein selektives Einsetzen des Sonderbetriebsmodus des Steuerungsverfahrens zu ermöglichen.

6. Anlage nach Anspruch 5, **dadurch gekennzeichnet, dass** die Steuerungsvorrichtung (55) geeignet ist, Mittel zum Betätigen (70) der Blas- oder Streckblasmittel (47) zu steuern, die dazu bestimmt sind, systematisch das Bewegen der Düse (56) und selektiv das Zuführen des Blasfluids in die Düse (56) und/oder das Bewegen der Verlängerungsstange (82) zu bewirken.

7. Anlage (10) nach Anspruch 6, **dadurch gekennzeichnet, dass** die Mittel zum Betätigen (70) der Blas- oder Streckblasmittel von pneumatischen Mitteln, wie Zylindern gebildet sind.

8. Anlage (10) nach einem der Ansprüche 5 bis 7, umfassend wenigstens einen Schutzraum (52), der einen Kasten bildet, welcher derart angeordnet ist, dass er wenigstens die Formeinheit (42), den Transferbereich (36) sowie den Ausgangsbereich (34) des Ofens (28) der Anlage umschließt, wobei der Raum (52) insbesondere um das Rad (44) herum einen U-förmigen Umfangsbereich (54) begrenzt, der sich von dem Zuführbereich (40) bis zu dem Austragbereich (48) erstreckt, **dadurch gekennzeichnet, dass** die Anlage (10) ein System zum Einblasen von gefilterter Luft in das Innere des Raumes (52) umfasst, das dazu bestimmt ist, einen Luftstrom wenigstens oberhalb des Zuführbereichs (40) und des Austragbereichs (48), in denen jede Form (46) sich jeweils in der geöffneten Stellung befindet, einzuspritzen, um jedwede luftgetragene Partikelkontamination der Form (46) zu vermeiden.
